# EUROPEAN PATENT APPLICATION

(11) **EP 1 967 641 A1**
(43) Date of publication of application: **10.09.2008**
(21) Application number: 08004190.8
(22) Date of filing: 06.03.2008
(51) Int. Cl.: D06F 58/20, F26B 23/00, F24F 12/00, F24F 5/00

(54) **Dry air-supplying apparatus and dryer**

(30) Priority: 07.03.2007 JP 2007056556
(71) Applicant: Sanyo Electric Co., Ltd., Osaka 570-8677 (JP)
(72) Inventor: Mukaiyama, Hiroshi, Ora-gun Gunma, 370-0725 (JP); Kurosawa, Yoshiaki, Hirose Kumagaya-shi Saitama, 360-0833 (JP); Otake, Masahisa, Ora-gun Gunma 370-0615 (JP); Nagae, Etsushi, Seto-shi Aichi, 489-0068 (JP)
(74) Representative: Rutherford, Claire

(57) **Abstract**

Problem to be Solved

To minimize the heat energy required for supplying dry air.

Solution

A dry air-supplying apparatus 1 comprises a dry air-supplying air path 6 for supplying air from the surroundings that has been heated as dry air and a discharge air path 7 for discharging the moist air to the surroundings after the drying operation by the supplied dry air. Thus, the dry air-supplying air path draws in surrounding air and provides heat-exchanges by a heat exchanger 13 with the air in the discharge air path, this heat-exchanged air is heated by a radiator 14 and is supplied as dry air; while the discharge air path provides heat-exchanges, by the heat exchanger, the moist air after the drying operation with the air in the dry air-supplying air path, cools and dehumidifies the air that has been heat-exchanged by a cooler, and discharges it.

## Description

### Field of the Invention

The present invention relates to a dry air-supplying apparatus for supplying dry air to dry various items to be dried and to a dryer.

### Background of the Invention

In conventional dry air-supplying apparatuses, moist air is discharged, as it is, to the outside after the items to be dried have been subjected to a drying treatment.

Moreover, in another type of conventional dry air-supplying apparatuses, as for example shown in JP, A, 2007-715b, the items to be dried are dried by hot air heated by a radiator, and the moist air, after the drying operation, is cooled by a cooler to remove its moisture, and thereafter the air, from which the moisture has been removed, is again heated by the radiator and reused as dry air. In this manner, the air is circulated as alternately repeating cooling and heating operations.

### Summary of the Invention

### Problems to be Solved by the Invention

When warm moist air is discharged, as it is, to the outside, the heat of the warm moist air is emitted to the outside and the heat energy of the moist air is lost without being effectively used. Together with this, the humidity and temperature of the surroundings to which the air is discharged rise, and there arises a risk that the surrounding environment will be significantly influenced.

If, moreover, air is circulated as repeatedly performing alternate cooling and heating operations, there is a big energy loss because it accompanies heating cool air and cooling the warm air that has been heated, thereby necessitating extra heating for an amount of seisible heat.

Thus, the problem to be solved is that much energy is needed for supplying dry air.

### Means for Solving the Problems

A dry air-supplying apparatus 1 according to the present invention comprises a dry air-supplying air path 6 for supplying air from the surroundings that has been heated as dry air and a discharge air path 7 for discharging moist air to the surroundings after the drying operation by the supplied dry air. The dry air-supplying air path draws in surrounding air and provides heat-exchanges, by a heat exchanger 13, with the air in the discharge air path, and this heat-exchanged air is heated by a radiator 14 and is supplied as dry air; while the discharge air path provides heat-exchanges, by the heat exchanger, between the moist air after the drying operation and the air in the dry air-supplying air path, and the heat-exchanged air is cooled and dehumidied by a cooler 23, and discharged.

Furthermore, the radiator and the cooler may constitute a refrigeration cycle wherein, between the outlet 13e of the heat exchanger at the discharge air path and the cooler, the air from the heat exchanger may be mixed with air from the surroundings before it flows to the cooler.

A dryer of the present invention comprises a storage compartment 52 in its casing for storing items to be dried such as clothes, a dry air-supplying air path for heating air from outside the storage compartment and supplying said heated air to the storage compartment, and a discharge air path for discharging air from inside the storage compartment to the outside of the storage compartment. The dry air-supplying air path draws in air from outside the storage compartment and provides heat-exchanges by a heat exchanger with the air in the discharge air path, this heat-exchanged air is heated by a radiator and supplied to the storage compartment, and at the discharge air path the air from inside the storage compartment is heat-exchanged by said heat exchanger with the air in the dry air-supplying air path, this heat exchanged air is mixed with air from the space between the casing and the storage compartment, cooled and dehumidified by a cooler and then discharged to the outside of the storage compartment.

### Advantageous Effect of the Invention

According to the present invention, when air from the surroundings is heated and supplied as dry air, the air from the surroundings is heat-exchanged by the heat exchanger with the air after the drying operation and, after the heat (in other words, sensible heat) has been retrieved from the air after the drying operation, it is further heated by the radiator and supplied as dry air. Consequently, the heat of the air that is discharged after the drying operation can be retrieved and effectively used. Moreover, an increase in temperature and humidity of the environment to which the air is discharged can be prevented because the air used for the drying operation that comes out of the heat exchanger is discharged after it has been cooled and dehumidified by the cooler.

Furthermore, if the radiator and the cooler constitute a refrigeration cycle wherein, between the outlet of the heat exchanger at the discharge air path and the cooler, the air from the heat exchanger is mixed with air from the surroundings before it flows to the cooler, the amount of air flowing through the cooler can be increased and the temperature of the refrigerant of the cooler can be raised by mixing the air in the discharge air path with the air from the surroundings. As a result of which the efficiency of the refrigeration cycle as a heat pump can be improved. At this juncture, the surrounding air can also be dehumidified.

Moreover, when the dry air-supplying apparatus of the present invention is employed in a dryer having a storage compartment in its casing for storing items to be dried such as clothes, air from the surroundings is heated and supplied as dry air to the storage compartment, hence air is not circulated but fresh air flowing in; therefore it is possible to avoid to the utmost odors and the like remaining inside the storage compartment. The air between the casing and the storage compartment is also dehumidified by the cooler, therefore, the inside of the casing can also be dried, the installation environment of electrical and other parts inside the casing can be improved and the occurrence of mold and rust can be avoided to the utmost.

### Detailed Description of the invention

The object that is minimizing the heat energy required for supplying dry air is achieved by, when supplying air from the surroundings after heating as dry air, heat-exchanging the air from the surroundings with the air that has been used for the drying operation, and, after the heat (in other words, sensible heat) has been retrieved from the air that has been used for the drying operation, by heating it further by the radiator and by supplying it as dry air.

### EXAMPLE 1

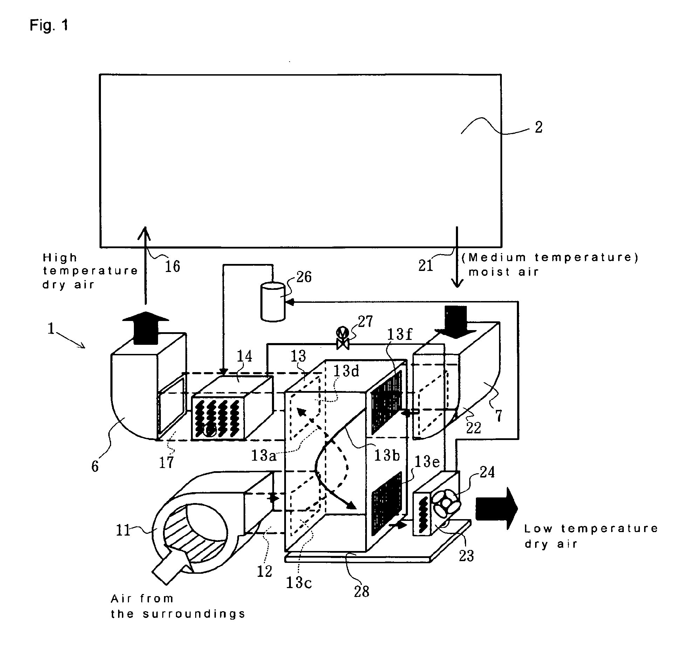

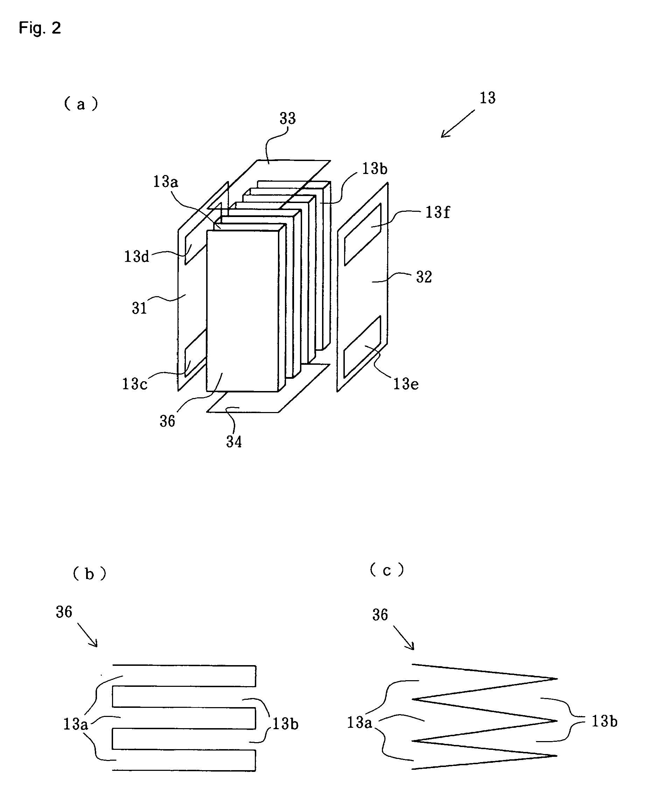

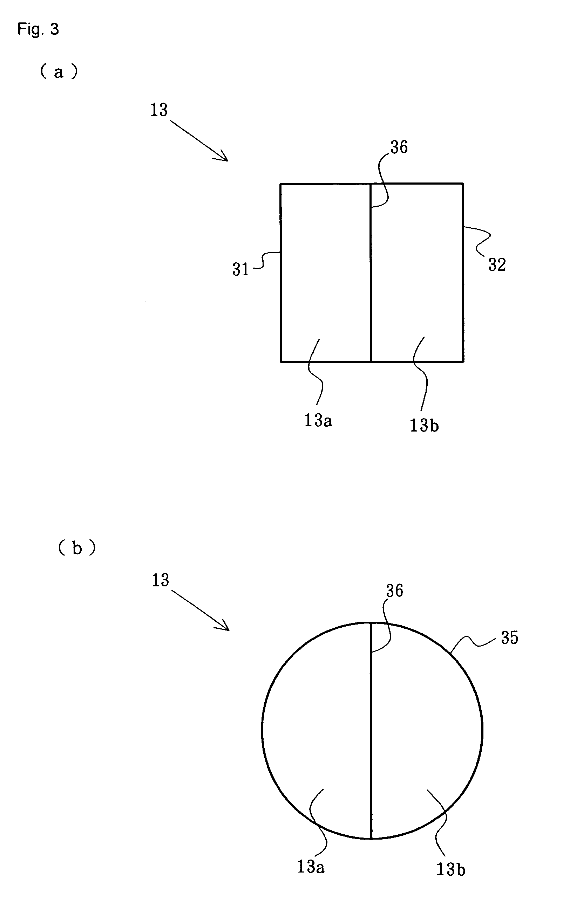

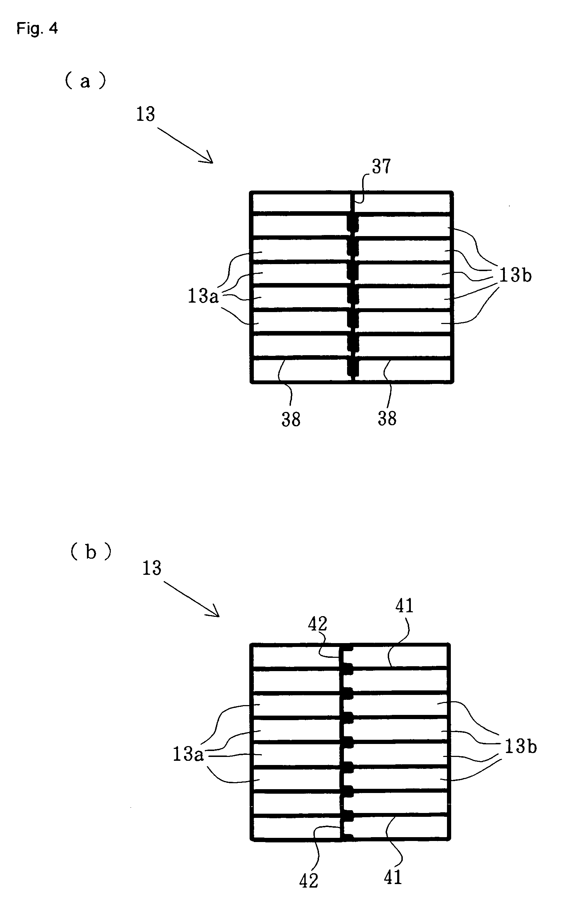

Now the first embodiment of a dry air-supplying apparatus according to the present invention will be explained by referring to Figs. 1 to 4. Fig. 1 shows a schematic diagram of the first embodiment of a dry air-supplying apparatus according to the present invention. Fig. 2 shows explanatory views of a heat exchanger: (a) is an exploded perspective view of the assembly; (b) is a sectional view of the partition plates; and (c) is a sectional view of a modification of the partition plates. Fig. 3 shows sectional views of two modifications of the heat exchanger. Fig. 4 shows two other modifications of the heat exchanger. In Fig. 1, parts of the ducts forming air paths are shown by broken lines. The upper plate of the heat exchanger in Fig. 2(a) is shown in a transparent state so that the shape of the partition plates below can be seen.

The air that is heated in the dry air-supplying apparatus is supplied to a drying chamber 2. The drying chamber 2 can, for example, be a storage compartment provided in the drum of a drying and washing machine for drying clothes after washing, an oven for drying food and food wastes, a drying chamber for drying parts that have been washed with a solvent, a drying chamber for drying dry-cleaned clothes and the like.

A dry air-supplying apparatus 1 comprises a dry air-supplying air path 6 supplying dry air to the drying chamber 2 and a discharge air path 7 for discharging air from the drying chamber 2 to the surroundings after it has been used for the drying operation. The dry air-supplying air path 6 comprises a fan 11 used for supplying dry air that is drawn into the apparatus 1 from the surrounding air (in other words, the air outside the drying chamber 2), a flow path of supplying side 13a of a heat exchanger 13 into which the air drawn in by the fan 11 flows via a duct 12, and a radiator 14 disposed downstream of the heat exchanger 13. The radiator 14 is provided in a duct 17 that leads from the heat exchanger 13 to the dry air-supplying opening 16 of the drying chamber 2.

The discharge air path 7 comprises a duct 22 leading from an air outlet 21 of the drying chamber 2 to the heat exchanger 13, a flow path of discharging side 13b of the heat exchanger 13 connected to the duct 22, a cooler 23 and a fan 24 for the cooler disposed spaced apart from and the downstream of an outlet 13e of the flow path of discharging side 13b. The heat exchanger 13, as will be explained hereinafter, heat-exchanges the air flowing in the flow path of supplying side 13a and the air flowing in the flow path of discharging side13b without mixing the two. Then, when the fan 24 for the cooler is in operation, discharge air coming out of the outlet 13e of the heat exchanger 13 is mixed with air from the surroundings, which flows into the space between the heat exchanger 13 and the cooler 23, and then flows to the cooler 23.

Together with a compressor 26 and an expansion valve 27, the radiator 14 and the cooler 23 constitute a refrigeration cycle using a carbon dioxide as a refrigerant (CO₂ refrigerant).

The compressor 26 compresses the CO₂ refrigerant in a gaseous state and delivers the refrigerant whose pressure and temperature has increased into the radiator 14. The radiator 14 heat-exchanges the refrigerant having a high temperature with the air inside the duct 17 of the dry air-supplying air path 6, thereby air-cooling the refrigerant and heating the air in the dry air-supplying air path 6. Then, the refrigerant coming out of the radiator 14 expands and lowers in its temperature as passing through the expansion valve 27, and flows to the cooler 23. The cooler 23 heat-exchanges the cool refrigerant with the discharge air in the discharge air path which has been mixed with air from the surroundings, cools and dehumidifies the discharge air which has been mixed with air from the surroundings. The dew condensation water produced at this stage drops as drain water into a drain pan 28 via which it is drained off.

The heat exchanger 13, as shown in Figs. 2(a) and 2(b), comprises a side plate 31 on the side of the dry air-supplying air path 6 of the left side, a side plate 32 on the side of the discharge air path 7 of the right side, an upper plate 33, a lower plate 34, and partition plates 36 for partitioning the flow path of supplying side 13a from the flow path of discharging side 13b. This partition plate 36 also functions as the front plate and the back plate of the heat exchanger 13. The in- and outlets 13c to 13f of the flow path of supplying side 13a and the flow path of discharging side 13b are formed on the side plates 31 and 32. The inlet 13c of the flow path of supplying side 13a is formed at the lower side, while the inlet 13f of the flow path of discharging side 13b is formed at the upper side; the flow through the flow path of supplying side 13a and the flow through the flow path of discharging side 13b are constituted so as to be oriented in opposite directions.

The partition plate 36 for partitioning the interior of the heat exchanger 13 are formed from metal plates of a material with high heat transfer properties such as copper, aluminium or the like so as to allow the heat exchange between the air inf the flow path of supplying side13a and the air in the flow path of discharging side13b. The side plates 31, 32, the upper plate 33 and the lower plate 34 which form the external contour of the heat exchanger 13 can be made of metal plates or plates made from resins or other materials.

The partition plates 36 shoin in Figs. 2(a) and 2(b) are formed by repeated bending into a shape approximately resembling the letter U laid on its side; however, they can also be formed by repeated bending into the shape of the letter V laid on its side, as shown by the modification in Fig. 2(c).

It is also possible to partition the interior space of the heat exchanger 13 into two parts by a flat partition plate 36 as in another modification shown in Fig. 3(a). Moreover, in the modification shown in Fig. 3(b), the external contour of the heat exchanger 13 is constituted by a cylindrical member 35. In other words, in the modification of Fig. 3(a), the section of the external contour of the heat exchanger 13 is rectangular, while in the modification of Fig. 3(b) it is circular.

In another modification shown in Fig. 4(a), it is also possible to form the flow path of supplying side13a and the flow path of discharging side 13b by partitioning the interior space of the heat exchanger 13 into two parts by a flat partition plate 37, and to provide a plurality of approximately L-shaped heat transfer fins 38 disposed at some intervals in each of the flow paths 13a, 13b. The bent ends of these approximately L-shaped heat transfer fins 38 are welded onto the partition plate 37. The heat transfer fins 38, like the partition plates 36, 37, are formed from metal plates of a material with high heat transfer properties such as copper, aluminium or the like so as to allow heat exchanges between the air in the flow path of supplying side 13a and the air in the flow path of the discharging side 13b.

Yet in another modification shown in Fig. 4(b), it is also possible to divide the interior space of the heat exchanger 13 into a plurality of divisions by a plurality of heat transfer fins 41 and to partition each of these divided spaces into two parts by partition plates 42 approximately resembling the shape of the letter U laid on its side. The heat transfer fins 41 and partition plates 42, like the above-mentioned heat transfer fins 38 and partition plates 36, 37, are made of a material with high heat transfer properties.

In this way, the heat exchanger 13 is constituted so as to allow the heat exchange between the air in the flow path of supplying side 13a and the air in the flow path of discharging side13b without mixing the two.

In order to supply dry air by a dry air-supplying apparatus 1 constituted in this way, the fan 11, the compressor 26 and the fan 24 for the cooler are set in operation. Whereupon the air from the surroundings (in other words, air from outside the drying chamber 2) that is drawn into the dry air-supplying air path 6 by the fan 11 flows into the flow path of supplying side 13a of the heat exchanger 13 via the duct 12. The temperature of the air flowing through the flow path of supplying side 13a increases when it is heat-exchanged by the heat exchanger 13 with air having a high temperature that flows in the flow path of discharging side 13b from the drying chamber 2. Following which, it is further heated by the radiator 14 and supplied as high temperature dry air to the drying chamber 2 through the dry air-supplying opening 16. The dry air supplied to the drying chamber 2 dries the items to be dried in the drying chamber 2. Accompanying this, there is an increase in the humidity of the dry air together with a small drop in temperature.

The moist air inside the drying chamber 2 flows from the air outlet 21 of the drying chamber 2 into the discharge air path 7. The temperature of the moist air that flows into the discharge air path 7 is lower than that of the dry air and higher than that of the surrounding air. The moist air that flows into the discharge air path 7 then flows in the flow path of discharging side 13b of the heat exchanger 13 whereupon its temperature is decreasedas it is heat-exchanged in the heat exchanger 13 with air from the surroundings flowing in the flow path of supplying side 13a. Following which, it comes out from the outlet 13e of the discharge side flow path 13b, is mixed with air from the surroundings, cooled and dehumidified by the cooler 23 and discharged. The dew condensation water produced during dehumidification drops as drain water into a drain pan 28 and is drained off. When dry air is supplied from the dry air-supplying apparatus 1 to the drying chamber 2, the rotational speed of the fan 11, the compressor 26 and the fan 24 for the cooler together with the degree of opening of the expansion valve 27 can be suitably adjusted in accordance with the load of the drying chamber 2 and the like.

Thus, air from the surroundings is heat-exchanged by the heat exchanger 13 with air from the drying chamber that has been used for the drying operation and, after the heat (in other words, sensible heat) has been retrieved from the air out of the drying chamber 2 that has been used for the drying operation, it is further heated by the radiator 14 and supplied as dry air to the drying chamber 2. Consequently, the heat of the air that is being discharged from the drying chamber 2 after the drying operation can be effectively used.

An increase in temperature and humidity of the environment to which the air is discharged can be prevented because the air that comes out of the heat exchanger 13 is discharged after it has been cooled and dehumidified by the cooler 23.

The moist air coming out of the heat exchanger 13 is mixed with air from the surroundings and flows to the cooler 23. This cooler 23 may constitute together with the radiator 14 a refrigeration cycle as a heat pump, whereby the amount of air flowing through the cooler 23 can be increased and the temperature of the refrigerant of the cooler 23 can be raised by mixing the moist air with air from the surroundings. As a result of which the efficiency of the refrigeration cycle as a heat pump can be improved. At this juncture, moreover, the surrounding air can be dehumidified.

Moreover, due to leakage from the drying chamber 2 through its door and such places, there is a drop in the amount of air that is fed into the dry air-supplying air path 6 by the fan 11 from the surroundings when it flows between the air paths 6, 7 and the drying chamber 2; therefore, the amount of air in the flow path of discharging side 13b of the heat exchanger 13 is less than the amount of air that flows in the radiator 14. Consequently, the amount of air flowing to the cooler 23 can be assured by supplementing the air from the flow path of discharging side 13b of the heat exchanger 13 with air from the surroundings before it is fed to the cooler 23.

### EXAMPLE 2

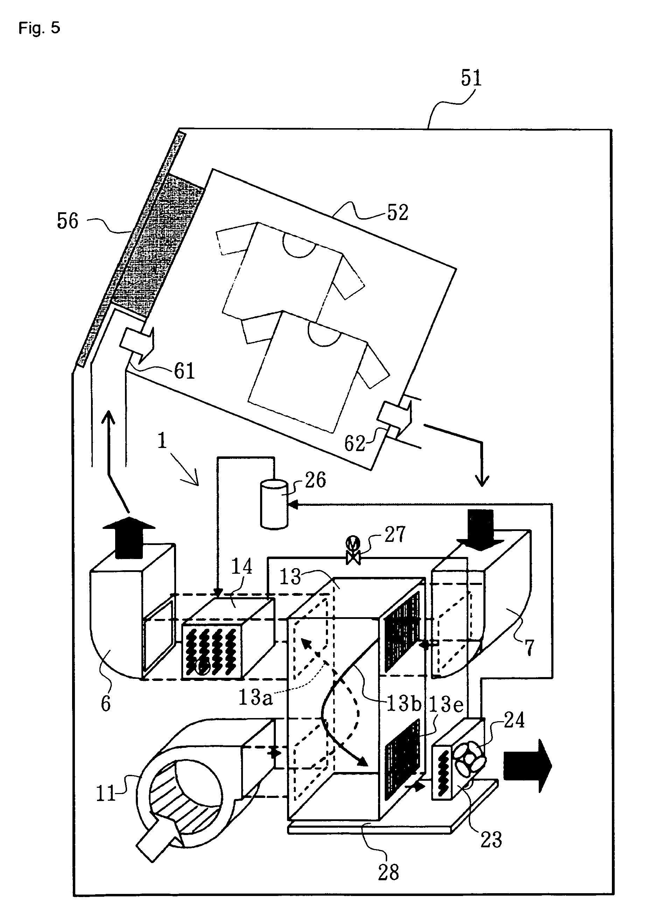

Next, the second embodiment of a dry air-supplying apparatus according to the present invention will be explained. Fig. 5 shows a schematic diagram of the second embodiment of a dryer according to the present invention. Furthermore, in the explanation of the second embodiment, its constituent elements that correspond to constituent elements in the first embodiment have the same reference numerals as in the first embodiment, and their detailed explanation is omitted.

In the second embodiment of a dry air-supplying apparatus, the dry air-supplying apparatus according to the first embodiment is used in a drum type drying and washing machine, wherein the dry air-supplying apparatus 1 according to the first embodimentis provided inside the dryer. The dry air-supplying apparatus 1 of the second embodiment has the same constitution as the dry air-supplying apparatus 1 according to the first embodiment.

A casing 51 of a drum type drying and washing machine is constituted by a cabinet that is open at the bottom; inside this casing 51, the storage compartment 52, which corresponds to the drying chamber 2 in the first embodiment, is provided for storing items to be dried such as laundry. A drum (not shown in the drawing) for loading clothes is provided inside this storage compartment 52 so as to be rotatable; this drum, which functions as a stirring device, is rotated by a driving motor. A front opening of the casing 51 is closed by a door 56 so that it can be opened and closed. This door 56 is opened for loading clothes into the drum of the storage compartment.

An air delivery opening 61 for supplying air (dry air) into the storage compartment 52 and an air discharge opening 62 for discharging the air (moist air) from inside the storage compartment 52 are provided in the storage compartment 52; the outlet of the dry air-supplying air path 6 of the dry air-supplying apparatus 1 is connected to the air delivery opening 61, while the inlet of the discharge air path 7 of the dry air-supplying apparatus 1 is connected to the air discharge opening 62.

When wet clothes are dried in a dryer constituted in this way, the door 56 is opened, the clothes are loaded into the storage compartment 52 and the door 56 is closed after loading. Then, the dry air-supplying apparatus is set in operation, air (surrounding air) is drawn in from the space between the casing 51 and the storage compartment 52 and is supplied as dry air via the heat exchanger 13 and the radiator 14 through the air delivery opening 61 to the storage compartment 52. The clothes are dried by the dry air that is being supplied while the drum (not shown in the drawing) of the storage compartment 52 is rotated. Then, the moist air in the storage compartment 52 after the drying operation comes out from the air discharge opening 62, is heat-exchanged by the heat exchanger, mixed with air (surrounding air) from between the casing 51 and the storage compartment 52, cooled and dehumidified by the cooler, and discharged to the outside of the storage compartment 52.

Air can circulate in the space between the casing 51 and the storage compartment 52 and the space outside the casing 51 because the bottom of the casing 51 is open. Consequently, the air outside the casing 51 can also be drawn into the dry air-suppfying apparatus 1 via the space between the casing 51 and the storage compartment 52. Furthermore, air from the dry air-supplying apparatus 1 can also be discharged to the outside of the casing 51 via the space between the casing 51 and the storage compartment 52.

Thus, air from the surroundings is heated and supplied as dry air to the storage compartment 52, hence air is not circulated but fresh air is blown in; therefore it is possible to avoid to the utmost odours and the like lingering inside the storage compartment 52. The air between the casing 51 and the storage compartment 52 is also dehumidified by the cooler 23, therefore, the inside of the casing 51 can also be dried, the installation environment of electrical and other parts inside the casing 51 can be improved and the occurrence of mold and rust can be avoided to the utmost.

### EXAMPLE 3

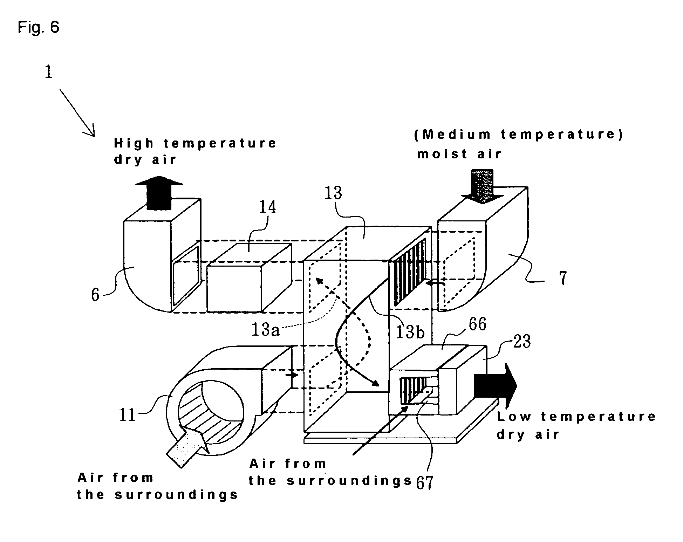

Next, the third embodiment of a dry air-supplying apparatus according to the present invention will be explained. Fig. 6 shows a schematic diagram of the third embodiment of a dry air-supplying apparatus according to the present invention. In the explanation of the third embodiment, the constituent elements, which correspond to constituent elements in the first embodiment, have the same reference numerals as in the first embodiment, and their detailed explanation is omitted.

The structure of the dry air-supplying apparatus 1 according to the third embodiment differs in the following three points from the first embodiment of the dry air-supplying apparatus 1:
(1) The radiator 14 and the cooler 23 in the third embodiment do not constitute a refrigeration cycle.
   In the third embodiment, the radiator 14 is constituted by an electrical heater or the like, and the cooler 23 is cooled with a refrigerant from another cooling source.
(2) In the third embodiment, a duct 66 is provided between the outlet 13e of the flow path of discharging side 13b of the heat exchanger 13 and the cooler 23. Openings 67 for taking in air from the surroundings are provided in the side faces of this duct 66; it is possible to mix the air from the surroundings that flows into these openings 67 with the air from the heat exchanger 13 when it flows to the cooler 23.
(3) Since the duct 66 is provided in the third embodiment, the air from the heat exchanger 13 is guided by the duct 66 and flows to the cooler 23. Consequently, a fan 24 for the cooler is not provided.

In the dry air-supplying apparatus 1 according to the third embodiment constituted in this way, in the same way as in the first embodiment of the dry air-supplying apparatus 1, the heat of the air that is discharged from the drying chamber 2 after the drying operation can also be retrieved at the heat exchanger 13 and effectively used. Moreover, an increase in temperature and humidity of the environment to which the air is discharged can be prevented because the air that comes out of the heat exchanger 13 is discharged after it has been cooled and dehumidified by the cooler 23.

### EXAMPLE 4

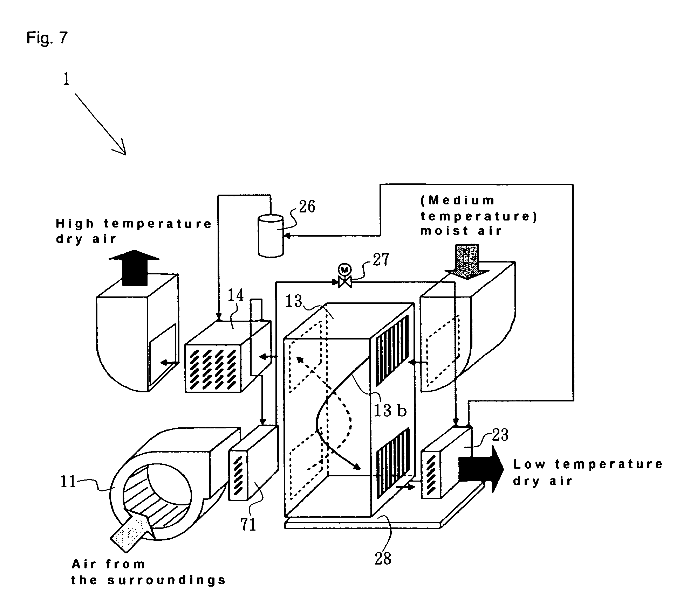

Next, the fourth embodiment of a dry air-supplying apparatus according to the present invention will be explained. Fig. 7 shows a schematic diagram of the fourth embodiment of a dry air-supplying apparatus according to the present invention. Furthermore, in the explanation of the fourth embodiment, the constituent elements, which correspond to constituent elements in the first embodiment have the same reference numerals as in the first embodiment, and their detailed explanation is omitted. In Fig. 7 the ducts are not shown; however, the ducts are provided in the same manner as in the first embodiment.

The dry air-supplying apparatus 1 according to the fourth embodimetn differs from the dry air-supplying apparatus 1 according to the fourth embodiment in that a sub-radiator 71 is provided; the remaining structure is identical.

In the refrigerant flow of the refrigeration cycle, the sub-radiator 71 is provided between the radiator 14 and the expansion valve 27 (in other words, downstream of the radiator 14 and upstream of the expansion valve 27). In the air flow of the dry air-supplying air path 6, the sub-radiator 71 is placed upstream of the heat exchanger 13. In the fourth embodiment, it is provided between the fan 11 and the heat exchanger 13.

In the first embodiment, in which the refrigerant that flows to the expansion valve 27 is air-cooled by warm air after the moist air from the drying chamber 2 has been heat-exchanged, the temperature cannot be sufficiently lowered and the efficiency of the refrigeration cycle is decreased. In the fourth embodiment, on the contrary, in which the refrigerant that flows to the expansion valve 27 is air-cooled in the sub-radiator 71 by air from the surroundings, the temperature can be sufficiently lowered and the efficiency of the refrigeration cycle can be improved.

ln the dry air-supplying apparatus 1 according to the fourth embodiment constituted in this way, in the same way as in the first embodiment of the dry air-supplying apparatus 1, the heat of the air that is discharged from the drying chamber 2 after the drying operation can also be retrieved at the heat exchanger 13 and effectively used. Moreover, an increase in temperature and humidity of the environment to which the air is discharged can be prevented because the air that comes out of the heat exchanger 13 is discharged after it has been cooled and dehumidified by the cooler 23.

### EXAMPLE 5

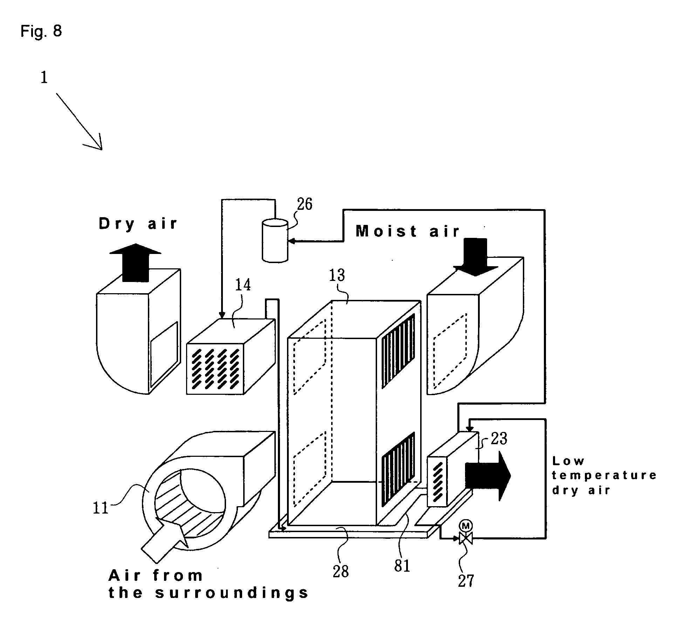

Next, the fifth embodiment of a dry air-supplying apparatus according to the present invention will be explained. Fig. 8 shows a schematic diagram of the fifth embodiment of a dry air-supplying apparatus according to the present invention. In the explanation of the fifth embodiment, the constituent elements, which correspond to constituent elements in the first embodiment have the same reference numerals as in the first embodiment, arid their detailed explanation is omitted. Moreover, in Fig. 8 the ducts are not shown and the arrows showing the air flow inside the heat exchanger 13 and the like are omitted; however, the ducts are provided and the air flow inside the heat exchanger 13 is identical to the first embodiment.

The dry air-supplying apparatus 1 according to the fifth embodiment differs from the first embodiment of the dry air-supplying apparatus 1 in that a sub-radiator 81 is provided in the drain pan 28; the remaining structure is identical.

In the refrigerant flow in the refrigeration cycle, the sub-radiator 81 according to the fifth embodiment is provided between the radiator 14 and the expansion valve 27 (in other words, downstream of the radiator 14 and upstream of the expansion valve 27) in a similar manner as the sub-radiator 71 of the fourth embodiment.

The dew condensation water produced during cooling by the cooler 23 drops into the drain pan 28 and is drained as drain water into a sewer or the like. This drain water has a low temperature as it is cooled by the cooler 23; by cooling the sub-radiator 81 with this low temperature drain water, the thermal energy of the drain water can be retrieved and the efficiency of the refrigeration cycle can be improved.

In the dry air-supplying apparatus 1 according to the fifth embodiment constituted in this way, in the same way as in the first embodiment of the dry air-supplying apparatus 1, the heat of the air that is discharged from the drying chamber 2 after the drying operation can also be retrieved at the heat exchanger 13 and effectively used. Moreover, an increase in temperature and humidity of the environment to which the air is discharged can be prevented because the air that comes out of the heat exchanger 13 is discharged after it has been cooled and dehumidified by the cooler 23.

The embodiments of the present invention have been explained in detail above; however, the present invention is not limited to these embodiments, and it is possible to make various modifications within the scope of the gist of the present invention stated in the claims.

Examples of modifications of the present invention are as follows:
(1) The heat exchanger 13 is assembled by welding; however, the assembly structure can be suitably selected, it can, for example, be assembled by fitting or the like.
(2) The position, structure and shape of the fan 11 can be suitably modified as long as it can draw in air from the surroundings and feed it to the drying chamber 2 via the heat exchanger 13 and the radiator 14.
(3) It is also possible to form holes in the side faces or the like of the casing 51 of the drying and washing machine.
(4) Air from the surroundings is admixed between the outlet 13e of the discharge air path 7 of the heat exchanger 13 and the cooler 23; however, it is also possible not to admix air from the surroundings. In other words, the outlet 13e of the discharge air path 7 and the cooler 23 can also be connected by a duct not having the openings 67 for taking in air from the surroundings. It is, however, preferred to admix air from the surroundings before air flows to the cooler 23.
(5) It is most preferred that the refrigerant is carbon dioxide (CO₂); however, other refrigerants are also possible.
(6) It is preferred that the radiator 14 is a gas cooler or a condenser of a refrigeration cycle; however, it can also be an electric heater, a gas heater, a burner or the like.
(7) In the third, the fouth or the fifth embodiments, of the dry air-supplying apparatuses, a drum type drying and washing machine in the same way as the second embodiment can also be used.
(8) In the dry air-supplying apparatus inside a drum type drying and washing machine, the air that is dehumidified by the cooler is discharged to the space between the casing and the storage compartment; however, it is also possible to discharge it to the outside of the casing. In the same way, in the dry air-supplying apparatus inside a drum type drying and washing machine, the air drawn into the dry air-supplying air path by the fan is the air in the space between the casing and the storage compartment, but can also be the air outside the casing. Yet it is preferred that the air from the surroundings admixed in between the heat exchanger and the cooler is from the air in the space between the casing and the storage compartment.

### Industrial Applicability

When air from the surroundings is heated and supplied as dry air, the air from the surroundings is heat-exchanged by the heat exchanger with the air after the drying operation and, after the heat (in other words, sensible heat) has been retrieved from the air after the drying operation, it is further heated by the radiator and used as dry air, whereby dry air can be supplied with little energy. Consequently, it is most preferred to apply this to a dry air-supplying apparatus for supplying dry air and to a dryer.

### Brief Description of the Drawings

Fig. 1 shows a schematic diagram of the fisrt embodiment of a dry air-supplying apparatus according to the present invention.
Fig. 2 shows explanatory views of a heat exchanger: (a) is an exploded perspective view of the assembly, (b) is a sectional view of the partition plate, and (c) is a sectional view of a modification of the partition plate.
Fig. 3 shows sectional views of two modifications of the heat exchanger.
Fig. 4 shows two other modifications of the heat exchanger.
Fig. 5 shows a schematic diagram of the second embodiment of a dryer according to the present invention.
Fig. 6 shows a schematic diagram of the third embodiment of a dry air-supplying apparatus according to the present invention.
Fig. 7 shows a schematic diagram of the fourth embodiment of a dry air-supplying apparatus according to the present invention.
Fig. 8 shows a schematic diagram of the fifth embodiment of a dry air-supplying apparatus according to the present invention.

### Explanation of the Reference Numerals

1 Dry air-supplying apparatus
6 Dry air-supplying air path
7 Discharge air path
13 Heat exchanger
13e Outlet of the heat exchanger
14 Radiator
23 Cooler
51 Casing of the dryer
52 Storage compartment of the dryer

## Claims

1. A dry air-supplying apparatus comprising:
a dry air-supplying air path for supplying air from the surroundings that has been heated as dry air and;
a discharge air path for discharging the moist air to the surroundings after the drying operation by the supplied dry air,
wherein the dry air-supplying air path draws in surrounding air and provides heat-exchanges with the air in the discharge air path by a heat exchanger, and supplies the heat-exchanged air that is heated thereafter by a radiator as dry air,
wherein the discharge air path provides heat-exchanges, by the heat exchanger, between the moist air after the drying operation and the air in the dry air-supplying air path, and cools and dehumidifies the air that has been heat-exchanged by a cooler, and discharges it.

2. A dry air-supplying apparatus according to claim 1,
wherein the radiator and the cooler constitute a refrigeration cycle,
wherein, between the outlet of the heat exchanger and the cooler at the discharge path, the air from the heat exchanger is mixed with air from the surroundings before it flows to the cooler.

3. A dryer having a storage compartment in its casing for storing items to be dried such as clothes, the dryer comprising:
a dry air-supplying air path for heating air from outside the storage compartment and supplying said heated air to the storage compartment;
a discharge air path for discharging air inside the storage compartment to the outside of the storage compartment,
wherein the dry air-supplying air path draws in air from outside the storage compartment and provides heat-exchanges with the air in the discharge air path by a heat exchanger, and supplies the heat-exchanged air, after it is heated by a radiator to the storage compartment,
wherein the discharge air path provides heat-exchanges, by the heat-exchanger, beteween the air from inside the storage compartment and the air in the dry air-supplying air path, and provides mixing of air from the space between the casing and the storage compartment into the heat-exchanged air, and cools, and dehumidifies by a cooler, and discharges it to the outside of the storage compartment.
